**Europäisches Patentamt**

**European Patent Office**

**Office européen des brevets**

(19)

(11) Publication number: **0 077 444**

**A1**

(12) # EUROPEAN PATENT APPLICATION

(21) Application number: **82107374.9**

(22) Date of filing: **13.08.82**

(51) Int. Cl.³: **C 04 B 43/02**

(30) Priority: **19.10.81 US 312585**

(43) Date of publication of application:
**27.04.83 Bulletin 83/17**

(84) Designated Contracting States:
**BE DE FR GB IT**

(71) Applicant: **Kennecott Corporation**
**10 Stamford Forum**
**Stamford Connecticut 06904(US)**

(72) Inventor: **TenEyck, John D.**
**1458 Ridge Road**
**Lewiston New York 14092(US)**

(74) Representative: **Patentanwaltsbüro Cohausz & Florack**
**Postfach 14 01 47**
**D-4000 Düsseldorf 1(DE)**

(54) **Ceramic fiber board.**

(57) A fiber reinforced heat resistant asbestos free article such as a board, its method of manufacture and the composition used in its manufacture. The board comprises less than 10 weight percent water and the balance being solids which comprise from about 1 to about 6 weight percent organic fibres, from about 15 to about 40 weight percent ceramic fibers, from about 1 to about 6 weight percent organic binder, 0 to about 5 weight percent colloidal silica, from about 0.2 to about 2 weight percent of a flocculent, and from about 50 to about 80 weight percent inorganic high temperature filler. The composition used in the manufacture of the board comprises the components of the above article dispersed in water. The method comprises draining water from the composition and drying the resulting article.

EP 0 077 444 A1

CERAMIC FIBER BOARD

BACKGROUND OF THE INVENTION

A)  Field of the Invention

This invention relates to refractory fiber articles and to their method of manufacture and more particularly relates to refractory fiber articles comprising refractory ceramic fibers bound together with a refractory cement.  The invention more particularly relates to refractory fiber articles which can be substituted for asbestos mill board.

B)  History of the Prior Art

In the prior art, asbestos mill board which comprises asbestos fibers bound with Portland cement and fillers, has traditionally been used for numerous applications where non-flammable board was desired.  For example, asbestos mill board was used in boiler coverings, personnel protection, blocking of welding splatter and in insulating mold linings.

Unfortunately, it has been found that asbestos dust is a severe health hazard causing lung disease and therefore the use of asbestos has declined rapidly.  Nevertheless, asbestos free refractory fiber boards having essentially all major useful characteristics in common with asbestos mill board have still not been manufactured.  This is  at least partially due to the unexpected difficulty in reproducing all of the physical characteristics of asbestos mill board.

Substitutes for asbestos mill board are however, on the market; however, these boards are all deficient in one or more characteristics which would make the boards an ideal substitute

1

for asbestos mill board.

In particular, one or more of the density, modulus of rupture, tensile strength, organic content, percent compression and recovery, maximum use temperature or water resistance are inferior to traditional asbestos mill board.

## BRIEF DESCRIPTION OF THE INVENTION

In accordance with the invention, there is provided a ceramic fiber article wherein the fibers are bound with a ceramic cement and which has properties which are essentially equivalent or superior to the properties of traditional asbestos mill board. The only property of significance which usually show some inferiority is the modulus of rupture which nevertheless can be adjusted to an initial value from about 50% of the initial modulus of rupture of traditional asbestos mill board to over 100% of the initial modulus of rupture of traditional asbestos mill board. In addition, the maximum use temperature of the article of the invention is superior to the maximum use temperature of traditional asbestos mill board. The modulus of rupture of the article of the invention actually improves upon exposure to high temperature; whereas, the modulus of rupture of asbestos millboard becomes worse under the same conditions.

In accordance with the invention, the solid composition, which may be a ceramic board, comprises less than 10 weight percent water with the balance being solids. The solids comprise from about 1 to about 6 weight percent organic fibers; from about 15 to about 40 weight percent ceramic fibers; from about 1 to about 6 weight percent of an organic binder; from 0 to about 5 weight percent colloidal silica; from about 0.2 to about 2 weight percent of a flocculent; and from about 50 to about 80 weight percent inorganic high temperature filler. The invention further includes the composition from which the article is manufactured. The composition comprises water and from about 0.1 to about 15 percent by weight of the water of the mixture of solids as previously described.

The invention further comprises the method for manufacturing the article such as a ceramic board wherein a composition comprising water and from about 0.1 to about 15 weight percent solids which, if required, is further diluted with water to 0.1-2.0% solids and is then introduced into a form or onto a screen which permits water to drain from the composition. If desired, a vacuum may be used to assist in pulling water from the composition. The drained composition is then dried to form the desired product.

DETAILED DESCRIPTION OF THE INVENTION

The organic fibers used in accordance with the present invention are any suitable organic fibers which will give strength to the finished product. Examples of especially suitable fibers are cellulose fibers such as those found in wood pulp, flax fiber or cotton fiber. Modified cellulose fibers are also excellent such as fibers of cellulose acetate. Fibers of other polymers and resins such as nylon, polyolefin and vinyl polymers may also be used. Kraft pulp fibers are particularly desirable both because they lend good strength to the product and because of low cost.

The ceramic fibers used in manufacturing the article of the invention may be any ceramic fibers such as silicate glass fibers or alumino-silicate fibers. Because of high temperature resistance, alumino-silicate fibers are especially desirable. Alumino-silicate fibers, in conjunction with an appropriate binder, can give use temperatures in excess of about 2,300°F. The ceramic fibers usually have diameters of from about 0.5 microns to about 0.1 millimeter and lengths of from about 0.5 to about 50 millimeters.

The organic binder, used in accordance with the present invention, is any water resistant substance which will act to adhere the components of the composition. One example of such a binder is styrene butadiene rubber latex. This binder gives excellent results with the exception of modulus of rupture which initially is usually about 50% of the modulus of rupture of traditional asbestos mill board. Other suitable binders are thermosetting plastics such as phenolic resins. These binders give substantially higher moduli of rupture similar to the modulus of rupture of traditional asbestos mill board. As previously discussed, from about 1 to about 6 weight percent of the organic binder by weight of solids is desired to obtain sufficient strength. Starch may also be used as a binder, although when starch is used, water resistance of the finished product is not as good.

As a filler and additional binder which takes effect after the board is exposed to heat, colloidal silica may be incorporated in an amount of 0 to about 5 weight percent. While no colloidal silica is essential, i.e., 0 percent, usually between 1

4

and 5 percent by weight of solids is used.

From about 0.2 to about 2 weight percent of flocculent is used to precipitate the colloidal silica and sometimes the binder upon the fibers in order to prevent migration. The flocculent may be any suitable compound which will agglomerate or precipitate the binder onto the fibers and fillers if any. Examples of suitable flocculents are polyacrylamide, polyacrylimide, modified guar gum, aminopolyamides and compounds which dissolve to yield a polyvalent ion such as calcium oxide, aluminum sulfate and iron chloride.

From about 50 to about 80 weight percent inorganic high temperature filler is incorporated into the composition. Such fillers include silica, alumina, clay and zirconia.

In practising the method of the invention, from about 1 to about 6 weight percent of the organic fibers, from about 15 to about 40 weight percent of the ceramic fibers; from about 1 to about 6 weight percent of an organic binder; 0 to about 5 weight percent colloidal silica; from about 0.2 to about 2 weight percent of flocculent and from about 50 to about 80 weight percent inorganic high temperature filler are incorporated into water at a concentration of from about 1 to about 15 percent by weight of the water. The materials are combined in a beater or other suitable mixer. Once precipitation of the binder has been achieved by addition of a flocculent, the product is formed on a screen or in a mold having orifices which permit drainage of water from the solids. Thin sheets of formed material can then be pressed together in a press or by winding on a roll to form a thick board (i.e., 1/8 to 3 inches thick) made of integrally laminated sheets. The wet formed board can be immediately dried in an oven at a temperature of up to 250°F. This is a significant advantage over asbestos mill board, which is cement bonded and must be allowed to cure for up to two weeks before finishing and packaging. The board may be manufactured on a conventional mill board machine which has means for forming, laminating and drying the board. Unlike the hydrated cement bond used in the asbestos mill board, boards manufactured in accordance with the present invention actually become stronger after exposure to high temperatures, i.e., the modulus of rupture can increase by as much as about 100%; whereas, the modulus of rupture of traditional asbestos mill board can actually become reduced by as much as 75% on exposure to high temperature. The following examples serve to illustrate and not limit the present invention. Unless otherwise indicated, all dispersions and solutions are in water and all parts and percentages are by weight.

EXAMPLE I

To demonstrate the formation of a sheet, in accordance with the invention, suitable for laminating into a board, 0.9 grams of kraft pulp fiber was blended for 45 seconds in a Waring® blender with 500 mls of water. The blend was added to 2000 mls of water in a beaker and continuously mixed during separate addition of other components to maintain a uniform suspension. 6 grams of alumino-silicate fiber was then added followed by 7.5 grams of silica flour (about 290 mesh), 10.5 grams of kaolin clay, 2.7 grams of 40% colloidal silica, 2.4 grams of starch and 50 mls of 0.1% cationic polyacrylamide flocculent.           **0077444**

The finished mix was then poured into an 8 inch square sheet mold having an 80 mesh brass screen.  After drainage of the liquid in about 20 seconds, a sheet was formed which was about 0.029 inches thick.  The sheet was easily removed from the wire and had a density after pressing at 25 psi of 55 pounds per cubic foot.

EXAMPLE II

The procedure of Example I was followed except 9.3 grams of silica flour was used, 1.3 grams of 46% styrene butadiene latex was substituted for the starch, 3 mls of 1% polyacrylamide flocculent was used and 40 ml of 10% lime water was used.  The resulting product had properties similar to those of the product of Example I except release from the screen was better.

EXAMPLE III

109 pounds of kraft fiber was beaten into 500 gallons of water in a pulp beater.  200 pounds of alumino-silicate fiber was then mixed but not beaten into the kraft fiber slurry.  Slight additions of water were added when necessary to keep the slurry fluid.  250 pounds of silica flour and 350 pounds of clay were then mixed into the slurry.  80 pounds of starch was then slowly added followed by 90 pounds of 40% colloidal silica.  Three and one-third pounds of polyacrylamide flocculent was added to about 500 gallons of water and the resulting mixture was added to the slurry.  100 gallons of 0.5% solution of high molecular weight polyethylene oxide was mixed with 500 gallons of water and after 25 minutes, the mix was added to the slurry.  The resulting composition was run through a mill board machine and some good

7

board was formed but could not be continuously made due to tackiness of the composition.

EXAMPLE IV

54 pounds of wet kraft fiber was beaten into 500 gallons of water. 100 pounds of alumino silicate fiber was then mixed but not beaten into the slurry. A predispersion of 175 pounds of clay and 100 pounds of silica flour in 300 gallons of water was then added to the slurry. 45 pounds of 40% colloidal silica dispersion was then added to the slurry followed by the addition of 22 lbs of styrene butadiene latex dispersed into 50 gallons of water. 12 gallons of a dispersion of 11.24 pounds of cationic polyacrylamide flocculent in 200 gallons of water was then added.

The resulting composition was run through a mill board machine. The use of the composition resulted in excellent release characteristics and excellent mill board.

A comparison of the properties of this millboard with conventional asbestos millboard and prior art commercial non-asbestos millboard is given in Table I.

## TABLE I

| PROPERTY | EXAMPLE IV MILLBOARD | ASBESTOS MILLBOARD | CERAWOOL® MILLBOARD* | MILLBOARD AF* | NU-BOARD** 1800 |
|---|---|---|---|---|---|
| DENSITY (pcf) | 65 | 55-72 | 35 | 26 | 66 |
| MODULUS OF RUPTURE (psi) | | | | | |
|   Uncured | ~425 | 890 | 275 | -- | 1700 |
|   After 5 hrs. at 1000°F | -- | 244 | -- | -- | -- |
|   After 1 hr. at 275°F | 494 | -- | -- | -- | -- |
|   After 24 hrs. at 2300°F | 856 | -- | -- | -- | -- |
| TENSILE STRENGTH (Psi) | 275 | 296 | -- | 7100 | 410 |
| LOSS ON IGNITION (LOI)% | 11 | <20 | 5 | 25 | 15 |
| % COMPRESSION @ 1000 psi | 15 | 7-13 | 745 | 75 | 36 |
| % RECOVERY | 46 | 35 | -- | 57 | 50 |
| MAX. USE TEMP. (°F) | 2300 | ~1600 | 1200 | 1200 | ~1800 |

* Johns Manville Corp.    ** Janos Industrial Insulation Corp.

As can be seen, the properties of the millboard of the invention in most cases are equivalent or superior to the properties of asbestos millboard and, in addition, are superior to Janos Industrial Insulation Corporation Nu-board 1800 in actual recovery after compression at 1000 psi. Nu-board 1800 compresses 36% and recovers 50% of the 36% compression leaving an 18% compression effect whereas, the board of the invention only initially compresses 15% and recovers 46% of the 15% compression leaving only an 8% compression effect. Furthermore, the board of

9

the invention has a higher use temperature than any of the other boards and actually gets stronger upon heating.

WHAT IS CLAIMED IS:

1. A solid composition comprising less than 10 weight percent water and the balance being solids which comprise:

a) From about 1 to about 6 weight percent organic fibers;

b) from about 15 to about 40 weight percent ceramic fibers;

c) from about 1 to about 6 weight percent of an organic binder;

d) 0 to about 5 weight percent colloidal silica;

e) from about 0.2 to about 2 weight percent of a flocculent; and

f) from about 50 to about 80 weight percent inorganic high temperature filler.

g) less than 10 weight percent water.

2. The composition of Claim 1 wherein the composition is in the form of a board.

3. The composition of Claim 1 wherein the composition comprises from about 1 to about 5 percent colloidal silica by weight of solids.

4. The composition of Claim 1 wherein the binder is a phenolic resin.

5. The composition of Claim 1 wherein the organic fibers are cellulose fibers supplied by wood pulp.

11

6.  The composition of Claim 1 wherein the ceramic fibers are alumino-silicate fibers.

7.  The composition of Claim 1 wherein the flocculent is a polyacrylamide.

8.  The composition of Claim 1 wherein the fiber is selected from the group consisting of silica, alumina and clay.

9.  A composition comprising water and from about 0.1 to about 15 percent, by weight of water, of a mixture comprising:

    a)    from about 1 to about 6 weight percent organic fibers;

    b)    from about 15 to about 40 weight percent ceramic fibers;

    c)    from about 1 to about 6 weight percent of an organic binder;

    d)    0 to about 5 weight percent colloidal silica;

    e)    from about 0.2 to about 2 weight percent of a flocculent; and

    f)    from about 50 to about 80 weight percent inorganic high temperature filler.

10.  The composition of Claim 9 wherein the mixture comprises from about 1 to about 5 weight percent of colloidal silica by of solids.

11. The composition of Claim 9 wherein the binder is a phenolic resin.

12. The composition of Claim 9 wherein the organic fibers are cellulose fibers supplied by wood pulp.

13. The composition of Claim 9 wherein the ceramic fibers are alumino-silicate fibers.

14. The composition of Claim 9 wherein the flocculent is a polyacrylamide.

15. The composition of Claim 9 wherein the fiber is selected from the group consisting of silica, alumina and clay.

16. A fiber reinforced heat resistant board comprising less than 10 weight percent water and the balance being solids which comprise:

a) From about 1 to about 6 weight percent organic fibers;

b) from about 15 to about 40 weight percent ceramic fibers;

c) from about 1 to about 6 weight percent of an organic binder;

d) 0 to about 5 weight percent colloidal silica;

e) from about 0.2 to about 2 weight percent of a flocculent;

f) from about 50 to about 80 weight percent inorganic high temperature filler; and

g) less than 10 weight percent water.

17. A method for manufacturing a fiber article which comprises draining water from the composition of Claim 9 and drying the remaining solid.

18. The method of Claim 17 wherein the article is a ceramic fiber board.

19. A method for making a composition from which water may be drained to form a ceramic fiber article which method comprises mixing from about 1 to about 15 percent solids into water by weight of water, said solids comprising:

a) from about 1 to about 6 weight percent organic fibers;

b) from about 15 to about 40 weight percent ceramic fibers;

c) from about 1 to about 6 weight percent of an organic binder;

d) 0 to about 5 weight percent colloidal silica;

e) from about 0.2 to about 2 weight percent of a flocculent; and

f) from about 50 to about 80 weight percent inorganic high temperature filler.

European Patent Office

**EUROPEAN SEARCH REPORT**

**0077444**

Application number

EP 82 10 7374

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 04 B 43/02 |
| X,Y | FR-A-1 533 770 (FOSECO TRADING) | 1,2,4, 6,8,9, 11,13, 15-19 | |
| | *Abstract 1,2a,b,c,f,3,4a,b; page 3, left-hand column, lines 31-41* | | |
| | --- | | |
| Y | KIRK-OTHMER: "Encyclopedia of chemical technology", 3rd Edition, vol. 1, 1978, John Wiley & Sons, New York (USA); *Page 326, line 45 to page 327, line 2; page 327, lines 5-7* | 7,14, 17 | |
| | --- | | |
| A | US-A-4 226 625 (G.A.DELCORIO) | | |
| | ----- | | |

**TECHNICAL FIELDS SEARCHED (Int. Cl. ³)**

C 04 B 43/00

The present search report has been drawn up for all claims

| Place of search THE HAGUE | Date of completion of the search 19-01-1983 | Examiner DAELEMAN P.C.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82